# EUROPEAN PATENT SPECIFICATION

(11) **EP 2 420 473 B1**
(45) Date of publication and mention of the grant of the patent: **27.08.2014**
(21) Application number: 10764195.3
(22) Date of filing: 09.03.2010
(51) Int. Cl.: C01B 3/38, H01M 8/04, H01M 8/06, C01B 3/32, C01B 3/48

(54) **Method of operating a hydrogen generation device**
Verfahren zum Betrieb einer Vorrichtung zur Wasserstofferzeugung
Procédé de fonctionnement d'un dispositif de génération d'hydrogène

(30) Priority: 17.04.2009 JP 2009100521; 04.03.2010 JP 2010048274
(43) Date of publication of application: 22.02.2012
(73) Proprietor: Panasonic Corporation, Kadoma-shi Osaka 571-8501 (JP)
(72) Inventor: TAMURA, Yoshio, Chuo-ku, Osaka-shi Osaka 540-6207 (JP); TAGUCHI, Kiyoshi, Chuo-ku, Osaka-shi Osaka 540-6207 (JP); KUSUMURA, Koichi, Chuo-ku, Osaka-shi Osaka 540-6207 (JP); YASUDA, Shigeki, Chuo-ku, Osaka-shi Osaka 540-6207 (JP); NAKAMURA, Akinari, Chuo-ku, Osaka-shi Osaka 540-6207 (JP)
(74) Representative: Grünecker, Kinkeldey, Stockmair & Schwanhäusser
(86) International application number: PCT/JP2010/001645
(87) International publication number: WO 2010/119608

(56) References cited:
- EP-A1- 2 416 428
- JP-A- 2002 348 101
- JP-A- 2004 196 610
- JP-A- 2004 210 576
- JP-A- 2005 206 395
- JP-A- 2009 218 032
- US-A1- 2008 311 444

## Description

### Technical Field

The present invention relates to a hydrogen generation apparatus and a fuel cell system including the hydrogen generation apparatus. The present invention particularly relates to a hydrogen generation apparatus configured to generate a hydrogen-containing gas through a reforming reaction by using steam and a raw fuel such as a natural gas, LPG, gasoline, naphtha, kerosene, or methanol, the raw fuel containing an organic compound of which constituent elements are carbon and hydrogen, and to a fuel cell system including the hydrogen generation apparatus.

### Background Art

In conventional hydrogen generation apparatuses for supplying a hydrogen gas, a raw fuel containing an organic compound of which constituent elements are carbon and hydrogen is steam-reformed by a reformer that includes a reforming catalyst layer. Through this reforming reaction, a hydrogen-containing gas is generated (hereinafter, the hydrogen-containing gas may be simply referred to as a "hydrogen gas", or alternatively, referred to as a "fuel gas").

Conventional fuel cell systems use such a hydrogen gas to cause a reaction between the hydrogen gas and an oxidizing gas such as air, thereby generating electric power and heat.

In a hydrogen generation apparatus, the reforming reaction, which is an endothermic reaction, progresses under a temperature of approximately 600°C to 700°C. Therefore, it is necessaty to heat the reforming catalyst layer in order to cause the reforming reaction to progress. In general, a combustion burner is used as means for heating the reforming catalyst layer. A raw fuel containing an organic compound, or an off fuel gas unused in the fuel cell, is supplied to the combustion burner as a fuel for the combustion burner, and also, air or the like is supplied to the combustion burner as an oxidizing gas. As a result, combustion of such an air-fuel mixture occurs. In order to cause the combustion of such an air-fuel mixture, an initial ignition of the combustion burner is necessary. One general ignition method is to generate electrical sparks by using an igniter (an ignition device) or the like.

There are cases where the flame of the combustion burner goes out due to fluctuations and/or external disturbances in a supply system (hereinafter, such a situation where the flame goes out is referred to as "flame extinction"). If flame extinction occurs at the combustion burner, heat necessary for the reforming reaction cannot be supplied to the reformer. This hinders the reformer from generating the hydrogen gas. As a result, the generation of power and heat by the fuel cell cannot be continued.

In this respect, there is a proposed stop process as follows: if flame extinction occurs at the combustion burner during a warm-up mode of the reformer of the hydrogen generation apparatus, an on-off valve provided on a bypass pipe that bypasses the fuel cell is closed, the exit of the hydrogen generation apparatus is sealed off, and fuel supply to the combustion burner is stopped; then, the combustion burner is purged by using an oxidizing gas such as air; and thereafter, the combustion burner is ignited again (see, for example, Patent Literature 1). It should be noted that in the warm-up mode of the reformer, the steam reforming reaction in the reformer progresses, and the hydrogen-containing gas generated through the steam reforming reaction is supplied to the combustion burner via the bypass pipe.

### Citation List

### Patent Literature

PTL 1: Japanese Laid-Open Patent Application Publication No. 2008-91094

EP 2 416 428 (a Article 54(3) document), US 2008/0311444, JP 2004 210576 and JP 2005 206395 each relate to a fuel power generation system.

### Summary of Invention

### Technical Problem

In such a conventional fuel cell system as described above, if flame extinction occurs at the combustion burner when the reforming reaction is progressing in the warm-up mode of the reformer, the bypass pipe is closed and the hydrogen generation apparatus is sealed off.

Here, a rapid increase occurs in the amount of gas within the hydrogen generation apparatus due to generation of steam from reforming water continuously fed to the hydrogen generation apparatus. This causes an increase in the internal pressure of the hydrogen generation apparatus which is sealed off. Accordingly, pressure load is exerted on the components of the hydrogen generation apparatus. It should be noted that even if the reforming water is not continuously supplied into the hydrogen generation apparatus after the occurrence of the flame extinction of the combustor, it is expected that the same problem as above occurs due to a rapid internal pressure increase that is caused by evaporation of the reforming water that remains within the hydrogen generation apparatus.

The present invention has been made in view of the above problems. The present invention is directed to a hydrogen generation apparatus that is configured to supply, while generating a hydrogen-containing gas in a start-up process through a reforming reaction using steam, the hydrogen-containing gas to a combustor to cause combustion, and an object of the present invention is to provide a hydrogen generation apparatus that reduces, as compared to the conventional art, pressure damage to its components at the time of igniting the combustor after flame extinction has occurred at the combustor.

### Solution to Problem

In order to solve the above problems, a method of operation of a hydrogen generation apparatus is defined in claim 1.

Further, advantageous embodiments are defined in claims 2 - 7.

### Advantageous Effects of Intention

According to the present invention, in a case where flame extinction has occurred at the combustor, the ignition operation is performed while a gas passage through which a gas supplied from the hydrogen generator to the combustor flows is kept opened. Accordingly, pressure damage to the hydrogen generation apparatus is reduced as compared to the conventional art when the ignition operation is performed after the flame extinction.

### Brief Description of Drawings

[Fig. 1] Fig. 1 is a block diagram showing an example of the configuration of a hydrogen generation apparatus according to Embodiment 1 of the present invention.
[FIG. 2] FIG. 2 is a block diagram showing an example of the configuration of a hydrogen generation apparatus according to Embodiment 2 of the present invention.
[FIG. 3] FIG. 3 is a block diagram showing an example of the configuration of a fuel cell system according to Embodiment 3 of the present invention.
[FIG. 4] FIG. 4 is a block diagram showing a variation of the hydrogen generation apparatus according to Embodiment 2 of the present invention.
[FIG. 5] FIG. 5 is a block diagram showing a variation of the hydrogen generation apparatus according to Embodiment 2 of the present invention.
[FIG. 6] FIG. 6 is a block diagram showing a variation of the hydrogen generation apparatus according to Embodiment 2 of the present invention.

### Description of Embodiments

First, various features of respective embodiments of the present invention are described below.

A hydrogen generation apparatus according to a first aspect includes: a hydrogen generator configured to generate a hydrogen-containing gas through a reforming reaction by using a raw fuel and steam; a combustor configured to heat the hydrogen generator; an on-off valve configured to open/block a gas passage through which the gas that is sent out from the hydrogen generator is supplied to the combustor; an ignition device provided at the combustor; and a controller. The combustor is configured to perform combustion during generation of the hydrogen-containing gas in a start-up process by using the gas that is supplied to the combustor through the gas passage. In a case where flame extinction has occurred at the combustor during the generation of the hydrogen-containing gas in the start-up process, the controller performs an ignition operation of the ignition device with the on-off valve kept opened.

With the above configuration, a countermeasure is taken against the flame extinction of the combustor. The countermeasure is to perform the ignition operation of the ignition device in a state where the on-off valve, which is configured to open/block the gas passage through which the gas sent out from the hydrogen generator is supplied to the combustor, is kept opened.

In this manner, the hydrogen generator is maintained to be in a state of being opened to the atmosphere through a flue gas passage even after the flame extinction has occurred at the combustor. Therefore, an increase in the internal pressure of the hydrogen generation apparatus that is caused by a gas amount increase due to water evaporation is suppressed. Thus, pressure damage is reduced as compared to the conventional art when the ignition operation is performed after the flame extinction.

The "raw fuel" herein refers to a material that contains an organic compound of which the constituent elements include at least carbon and hydrogen. A fuel gas is generated from the material through the reforming reaction. Examples of the "raw fuel" include hydrocarbons such as methane, ethane, and propane, and alcohols such as methanol and ethanol.

The "reforming reaction" includes both steam reforming reaction and autothermal reaction.

The "combustor" refers to, for example, a heating device such as a combustion burner configured to combust an air-fuel mixture. As described above, the "flame extinction at the combustor" refers to a situation where the flame of the "combustor" goes out.

The "ignition device" refers to, for example, an electrical ignition device such as an igniter (spark plug). In this case, the "ignition operation of the ignition device" refers to an operation of electrically generating sparks by using the spark plug.

The "on-off valve" may be, for example, a solenoid valve of which the valving element is opened/closed by electromagnetic force.

The "on-off valve configured to open/block a gas passage through which the gas that is sent out from the hydrogen generator is supplied to the combustor" is realized as, for example, an on-off valve that is provided on a passage through which the gas that is sent out from the hydrogen generator is guided into the combustor in a manner to bypass a hydrogen utilization apparatus (e.g., a fuel cell).

The wording "open/block a gas passage" (i.e., open and block a gas passage) refers to opening/closing the internal gas-passing space of the gas passage. If the "on-off valve" is in an opened state, gas is allowed to flow through the gas passage. If the "on-off valve" is in a closed state, gas is blocked from flowing through the gas passage.

The "controller" is configured as, for example, a microcomputer that includes a CPU and a memory. The "controller" may be either a single controller or a plurality of controllers.

The "start-up process" includes a temperature increasing process of increasing the temperature of the hydrogen generator to a temperature suitable for the reforming reaction. The "start-up process" refers to a process that is performed before the hydrogen utilization apparatus starts using the hydrogen-containing gas.

A hydrogen generation apparatus according to a second aspect may be configured such that the hydrogen generation apparatus according to the first aspect includes: a combustion air supply device configured to supply combustion air to the combustor; a raw fuel supply device configured to supply the raw fuel to the hydrogen generator; and a water supply device configured to supply water to the hydrogen generator. In the case where flame extinction has occurred at the combustor during the generation of the hydrogen-containing gas in the start-up process, the controller may cause the raw fuel supply device and the water supply device to supply the raw fuel and the water to the hydrogen generator, and cause the combustion air supply device to supply the combustion air to the combustor, and perform the ignition operation of the ignition device, with the on-off valve kept opened.

According to this configuration, if the combustor is re-ignited through the ignition operation of the ignition device, the generation of the hydrogen-containing gas by the hydrogen generation apparatus can be continued smoothly since the supply of the raw fuel to the hydrogen generator by means of the raw fuel supply device and the supply of the water to the hydrogen generator by means of the water supply device have been performed.

A hydrogen generation apparatus according to a third aspect may be configured such that, in the hydrogen generation apparatus according to the first or second aspect, if the combustor is not successfully ignited through the ignition operation of the ignition device, the controller performs a stop process of the hydrogen generation apparatus.

According to this configuration, during the generation of the hydrogen-containing gas in the start-up process, if an ignition is not properly initiated through the ignition operation of the ignition device, such a failed ignition is addressed properly.

It should be noted that a specific example of the "stop process of the hydrogen generation apparatus" will be described below.

A hydrogen generation apparatus according to a fourth aspect may be configured such that, in the hydrogen generation apparatus according to any one of the first to third aspects, if the combustor is not successfully ignited through the ignition operation of the ignition device, the controller controls an operation amount of the combustion air supply device such that the operation amount becomes greater than when the hydrogen-containing gas is being generated in the start-up process.

According to this configuration, the amount of air sent to the combustor can be increased, and therefore, the combustible gas within the combustor can be diluted and discharged to the outside of the hydrogen generation apparatus. If the combustor is not successfully ignited, the air from the combustion air supply device acts as a medium for cooling down the hydrogen generation apparatus. Therefore, if the amount of the air is increased, the hydrogen generation apparatus can be cooled down smoothly.

The "combustion air supply device" herein may be, for example, a blower such as a fan.

Among determining factors in an air amount fed to the combustor, the air amount representing the control amount of the "combustion air supply device", a determining factor controllable by the "controller" (e.g., the number of rotations of the fan) is herein referred to as the "operation amount of the combustion air supply device". Accordingly, the air amount fed to the combustor is increased/decreased in accordance with an increase/decrease in the "operation amount of the combustion air supply device".

A hydrogen generation apparatus according to a fifth aspect may be configured such that the hydrogen generation apparatus according to any one of the first to fourth aspects includes: a first gas passage leading into the combustor in a manner to bypass a hydrogen utilization apparatus which uses the hydrogen-containing gas; and a first on-off valve configured to open/block the first gas passage. The combustor may be configured to combust, during the generation of the hydrogen-containing gas in the start-up process, the gas that is supplied to the combustor through the first gas passage. In the case where flame extinction has occurred at the combustor during the generation of the hydrogen-containing gas in the start-up process, the controller performs the ignition operation of the ignition device with the first on-off valve kept opened.

A hydrogen generation apparatus according to a sixth aspect may be configured such that the hydrogen generation apparatus according to the first or second aspect includes: a heat exchanger configured to perform heat exchange between an exhaust gas discharged from the combustor and a heating medium; a heating medium passage through which the heating medium flows; a pump configured to cause the heating medium to flow through the heating medium passage; and a heat accumulator configured to store heat that has been recovered by the heating medium.

The controller may cause the pump to operate during the ignition operation of the ignition device.

According to this configuration, even during the ignition operation of the ignition device that is performed when the combustor is not performing combustion, the heat exchange between the exhaust gas and the heating medium is performed appropriately. As a result, heat recovery from the exhaust gas is performed appropriately.

The "heat exchanger" may be configured as any device, so long as the device is intended to exchange heat between a high-temperature fluid (heating fluid) and a low-temperature fluid (heat receiving fluid).

Considering the thermal efficiency of the fuel cell system, it is preferred to recover heat from the exhaust gas through the heat exchange. The recovered heat may be used for hot water supply, floor heating, etc. In this case, piping that is connected to the heat accumulator (e.g., the heat accumulator is a hot water tank for hot water supply or a passage that forms a floor heating system) may be used as the "heating medium passage"

Preferably, the "heating medium" is a liquid. For example, water in a liquid form or an antifreezing fluid may be used as the "heating medium".

The "pump" may be configured in any form, so long as the pump is configured to cause the heating medium to flow through the heating medium passage.

The "exhaust gas" refers to a gas discharged from the combustor. Examples of the "exhaust gas" include: a flue gas that is generated due to combustion of an air-fuel mixture of a combustion fuel and combustion air; and the combustion air when the combustion of the combustor is stopped.

A hydrogen generation apparatus according to a seventh aspect may be configured such that, in the hydrogen generation apparatus according to the first or second aspect, a period over which the ignition operation of the ignition device is performed in said case is shorter than a period over which the ignition operation of the ignition device is performed at the start of the combustion of the combustor in the start-up process.

When flame extinction has occurred at the combustor during the generation of the hydrogen-containing gas in the start-up process, the amount of combustible gas present within the combustor at the time is greater than when the ignition operation is performed at the start of the combustion in the start-up process. Therefore, if the period of the ignition operation that is performed in the case where flame extinction has occurred at the combustor during the generation of the hydrogen-containing gas in the start-up process, is prolonged, then there is a possibility that the combustible gas is discharged to the outside of the hydrogen generation apparatus through the flue gas passage. Here, the possibility that the combustible gas is discharged to the outside of the hydrogen generation apparatus can be reduced by setting the period of the ignition operation that is performed in the case where flame extinction has occurred during the generation of the hydrogen-containing gas in the start-up process to be shorter than the period of the ignition operation that is performed at the beginning of the start-up process. The "period of the ignition operation" herein refers to, in the case of the ignition operation of, for example, an igniter, a period over which the igniter continuously generates sparks to cause an ignition. The "period of the ignition operation" herein does not refer to an overall ignition period including a retry ignition operation that is performed after pre-purge (purging by air) of the combustor.

A fuel cell system according to a first aspect may include the hydrogen generation apparatus according to the first to seventh aspects and a fuel cell configured to generate power by using the hydrogen-containing gas that is supplied to the fuel cell from the hydrogen generation apparatus.

A fuel cell system according to a second aspect, which includes the hydrogen generation apparatus according to the first to fourth aspects, may include: a second gas passage leading into the combustor through a fuel cell which uses the hydrogen-containing gas; and a second on-off valve configured to open/block the second gas passage. The combustor may be configured to combust, during the generation of the hydrogen-containing gas in the start-up process, the gas that is supplied to the combustor through the second gas passage. In the case where flame extinction has occurred at the combustor during the generation of the hydrogen-containing gas in the start-up process, the controller performs the ignition operation of the ignition device with the second on-off valve kept opened.

### (Embodiment 1)

Hereinafter, specific configuration examples and operational examples of a hydrogen generation apparatus according to Embodiment 1 of the present invention will be described with reference to the accompanying drawings.

It should be noted that the specific description given below merely indicates examples of the hydrogen generation apparatus's features that are recited above at the beginning of Description of Embodiments. For example, in the description of specific examples below, the same terms as those used above to specify respective components of the hydrogen generation apparatus may be used with corresponding reference signs added thereto. In such a case, in the description below, each device specified by a term with a reference sign added thereto is merely an example of a component that is specified by the same term in the above description of the hydrogen generation apparatus.

Accordingly, the above-described features of the hydrogen generation apparatus are not limited by the specific description given below.

### [Example of Configuration of Hydrogen Generation Apparatus]

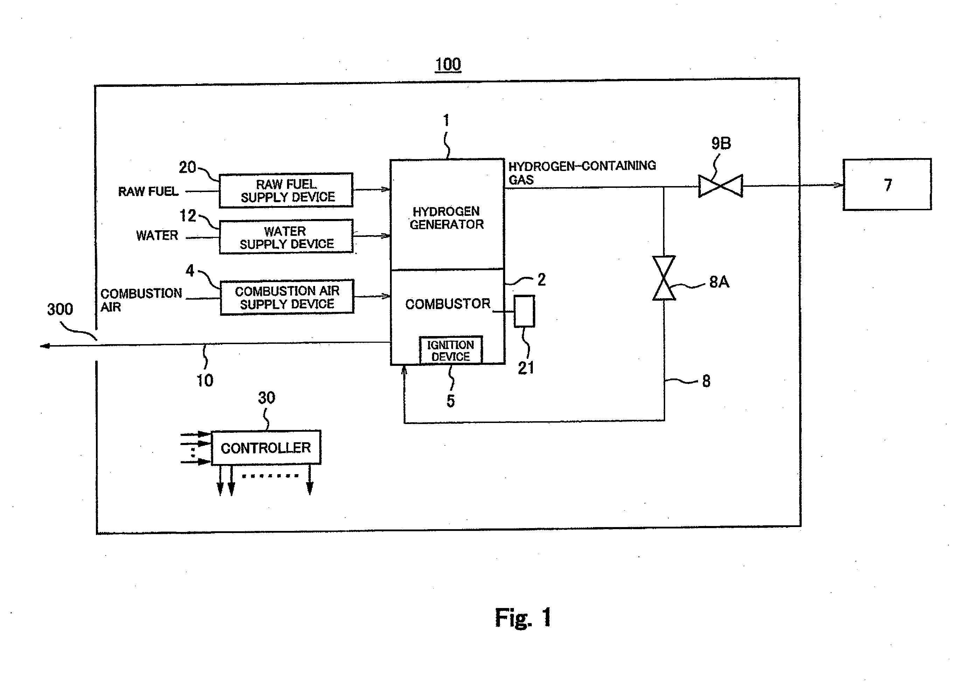

Fig. 1 is a block diagram showing an example of the configuration of the hydrogen generation apparatus according to Embodiment 1 of the present invention.

As shown in FIG. 1, a hydrogen generation apparatus 100 includes a hydrogen generator 1 configured to generate a hydrogen-containing gas through a reforming reaction by using a raw fuel and steam. The hydrogen generation apparatus 100 also includes a raw fuel supply device 20 configured to supply a raw fuel to the hydrogen generator 1, and a water supply device 12 configured to supply reforming water necessary for the reforming reaction in the hydrogen generator 1.

When the raw fuel and water are supplied to the hydrogen generator 1, the hydrogen generator 1 causes a reforming reaction between the raw fuel and water at a reforming catalyst layer (not shown). As a result, a hydrogen-containing gas is generated in the hydrogen generator 1. Although a reformer (not shown) that includes the reforming catalyst layer is provided within the hydrogen generator 1, such an internal configuration of the hydrogen generator 1 is publicly known. Therefore, a detailed description of the internal configuration is omitted below, and the internal configuration is not shown in the drawings. It should be noted that, depending on the configuration of the hydrogen generator, the hydrogen generator may include, in addition to the above-described reformer, a shift converter or a carbon monoxide remover together with the reformer for the purpose of reducing carbon monoxide in the hydrogen-containing gas, the shift converter being configured to reduce carbon monoxide through a shift reaction and the carbon monoxide remover being configured to reduce carbon monoxide through an oxidation reaction. The hydrogen generation apparatus 100 according to the present embodiment is configured such that the hydrogen-containing gas is generated through a steam reforming reaction. However, as an alternative, the hydrogen-containing gas may be generated through an autothermal reaction. In such a case, the hydrogen generation apparatus 100 includes an air supply device (not shown) configured to supply air to the hydrogen generator 1.

The raw fuel supply device 20 is connected to, for example, a raw fuel source (e.g., a city gas infrastructure or a propane gas canister). A booster pump, a flow rate adjusting valve, or the like may be used as the raw fuel supply device 20. In such a case, the raw fuel supply device 20 supplies the hydrogen generator 1 with a city gas which is an example of the raw fuel and which contains methane gas as a main component.

The water supply device 12 is connected to, for example, a water source (e.g., a water infrastructure or a water tank). A pump, a flow rate adjusting valve, or the like is used as the water supply device 12.

The reforming reaction (which is an endothermic reaction) at the reforming catalyst layer progresses under a high temperature of approximately 600°C to 700°C. Therefore, a combustor 2, which is configured to heat the hydrogen generator 1 from the outside to increase the temperature of the reforming catalyst layer, is necessary in order to cause the reforming reaction in the hydrogen generator 1 to progress.

Accordingly, as shown in Fig. 1, the hydrogen generation apparatus 100 includes: the combustor 2 configured to heat the hydrogen generator 1; a combustion air supply device 4 configured to supply the combustor 2 with air for use in combustion (hereinafter, simply referred to as "combustion air"); and an ignition device 5 provided at the combustor 2.

A fan configured to send to the combustor 2 an atmosphere (air) containing oxygen necessary for the combustion may be used as the combustion air supply device 4, for example. However, the combustion air supply device 4 need not be a fan. Any other device may be used as the combustion air supply device 4, so long as the device is configured to supply air. For example, a pump may be used as the combustion air supply device 4.

It should be noted that the supply of a fuel for use in the combustion (hereinafter, simply referred to as a combustion fuel) to the combustor 2 will be described in detail below.

When the combustion fuel and the combustion air are supplied to the combustor 2, combustion of an air-fuel mixture of the combustion fuel and the combustion air occurs within the combustor 2.

The ignition device 5 is used as an ignition source for causing the air-fuel mixture of the combustion fuel and the combustion air to be ignited in the combustor 2. As one example, an igniter (a spark plug) that electrically generates sparks may be used as the ignition device 5. Further, as shown in Fig. 1, the combustor 2 is provided with a flame detector 21 configured to detect presence or absence of a flame. As one example, a frame rod may be used as the flame detector 21.

As shown in FIG. 1, the hydrogen generation apparatus 100 includes a hydrogen utilization apparatus 7 configured to utilize the hydrogen-containing gas generated by the hydrogen generator 1. Examples of the hydrogen utilization apparatus include a hydrogen storage tank and a fuel cell. In the present embodiment, a hydrogen storage tank is used as the hydrogen utilization apparatus.

As shown in Fig. 1, the hydrogen generation apparatus 100 includes an on-off valve configured to open/block (open and block) a gas passage through which the gas that is sent out from the hydrogen generator 1 is supplied to the combustor 2. Accordingly, the internal gas-passing space of the gas passage can be opened and closed by using the on-off valve.

The gas passage is realized as a first gas passage 8 through which a combustible gas (e.g., a fuel gas) that is sent out from the hydrogen generator 1 is guided into the combustor 2 in a manner to bypass the hydrogen utilization apparatus 7. The on-off valve is realized as a first on-off valve 8A configured to open/block the first gas passage 8.

Fluid piping that forms a fluid passage may be used as the first gas passage 8, for example. A solenoid valve configured to open/close the internal space of the fluid piping may be used as the first on-off valve 8A, for example. It should be noted that a third on-off valve 9B (e.g., a solenoid valve) is provided on fluid piping that connects the hydrogen generator 1 and the hydrogen utilization apparatus 7.

As shown in Fig. 1, the hydrogen generation apparatus 100 includes a controller 30.

The controller 30 includes, for example, a CPU and a memory. The controller 30 controls operations of its various control target devices that are included in the hydrogen generation apparatus 100, based on signals from various detectors of the hydrogen generation apparatus 100.

In the hydrogen generation apparatus 100 according to the present embodiment, if for example the controller 30 detects the flame extinction of the combustor 2 by means of the flame detector 21, the controller 30 performs control to maintain a "state where the on-off valve configured to open/block the gas passage through which the gas sent out from the hydrogen generator 1 is supplied to the combustor 5 is kept opened". In such a state, the ignition operation of the ignition device 5 is performed. If the combustor 2 is not successfully ignited through the ignition operation of the ignition device 5, the controller 30 performs a stop process of the hydrogen generation apparatus 100. In addition, if the combustor 2 is not successfully ignited through the ignition operation of the ignition device 5, the controller 30 controls the operation amount of the combustion air supply device 4 such that the operation amount becomes greater than when the hydrogen generation apparatus is generating the hydrogen-containing gas in a start-up process.

It should be noted that these controls performed by the controller 30 will be described below in detail.

### [Example of Normal Operations of Hydrogen Generation Apparatus]

Hereinafter, an example of normal operations of the hydrogen generation apparatus 100 according to Embodiment 1 of the present invention is described. It should be noted that operations described below are performed as a result of the controller 30 controlling respective components of the hydrogen generation apparatus 100.

The normal operations of the hydrogen generation apparatus 100 are roughly categorized into the following steps: a start-up process, a hydrogen supply operation, a stop process, and a standby state. Since these steps are publicly known, they are described below briefly.

### (Start-Up Process)

The start-up process of the hydrogen generation apparatus 100 is performed when the hydrogen generation apparatus 100 is in a pre-startup state (e.g., a standby state described below). The start-up process is a process of starting and thereby causing the hydrogen generation apparatus 100 in the pre-startup state to become ready to stably generate a hydrogen-containing gas containing hydrogen at a high concentration. In the start-up process, a temperature increasing process of increasing the temperature of the hydrogen generator 1 to a suitable temperature is performed.

In the temperature increasing process, the combustion fuel and the combustion air are supplied to the combustor 2, and the air-fuel mixture of the combustion fuel and the combustion air is combusted in the combustor 2 by means of the ignition device 5. The combustion air is supplied to the combustor 2 by means of the combustion air supply device 4. Moreover, in the start-up process, the combustion fuel is supplied to the combustor 2 in a manner described below. A raw fuel gas sent out from the hydrogen generator 1, which is supplied to the combustor 2 through the first gas passage 8, is ignited and thereby the combustion starts, and thereafter, a combustible gas continuously sent out from the hydrogen generator 1 is used as the combustion fuel for the combustor 2.

In this manner, the hydrogen generator 1 is heated up. When the temperature of the reforming catalyst layer of the hydrogen generator 1 is increased to reach a temperature necessary for the reforming reaction, the water supply device 12 starts supplying water to the hydrogen generator 1. Accordingly, the hydrogen-containing gas is generated from the raw fuel and steam through the reforming reaction. When the temperature of the reforming catalyst layer of the hydrogen generator 1 has been sufficiently increased so that a high-quality hydrogen-containing gas (hereinafter, a hydrogen gas), in which a hydrogen concentration is high, can be stably generated, the operation advances to the hydrogen supply step of the hydrogen generation apparatus 100, which is described below.

### (Hydrogen Supply Step)

The hydrogen supply step of the hydrogen generation apparatus 100 is a step of supplying the hydrogen gas, which is generated by the hydrogen generator 1, to the hydrogen utilization apparatus 7.

In the hydrogen supply step, the high-quality hydrogen gas is supplied to the hydrogen utilization apparatus 7, and the hydrogen utilization apparatus 7 uses the hydrogen gas. In the hydrogen supply step, the third on-off valve 9B is opened for the purpose of supplying the hydrogen gas to the hydrogen utilization apparatus 7. Here, the first on-off valve 8A is also opened similar to the start-up process. Accordingly, the hydrogen gas that is sent out from the hydrogen generator 1 and that flows through the first gas passage 8 is partially supplied to the combustor 2 as a combustion fuel.

### (Stop Process)

The stop process of the hydrogen generation apparatus 100 is a process of stopping the hydrogen generation apparatus 100 from generating the hydrogen gas.

The stop process described below is performed, for example, in the following case: a case where the hydrogen demand of the hydrogen utilization apparatus has decreased; or a case where a user has inputted, via an operation device which is not shown, an instruction to stop the operation of the hydrogen generation apparatus 100. It should be noted that the case where the hydrogen demand of the hydrogen utilization apparatus has decreased refers to a case where, assuming that the hydrogen utilization apparatus is a hydrogen storage tank, the hydrogen storage tank contains a sufficient amount of hydrogen, or a case where, assuming that the hydrogen utilization apparatus is a fuel cell, the power demand of an electrical load has decreased to be less than or equal to a predetermined power threshold, so that the electrical load does not require power supply from the fuel cell.

In the stop process, the supply of the raw fuel and water to the hydrogen generator 1 is stopped. Also, the supply of the hydrogen gas as a combustion fuel to the combustor 2 is stopped. As a result, the combustion of the combustor 2 is stopped. In this case, however, it is usual to continue for a while the supply of the combustion air from the combustion air supply device 4. In this manner, the combustible gas that remains within the combustor 2 can be purged.

### (Standby State)

The standby state of the hydrogen generation apparatus 100 is a state of standing by after the stop process is completed. In the standby state, the operation stands by in preparation for the next start-up until an instruction to perform the next start-up is given.

In the standby state, when a request for the start-up of the hydrogen generation apparatus 100 occurs, the controller 30 outputs an instruction to start up the hydrogen generation apparatus 100, thereby starting the start-up process. It should be noted that the occurrence of the start-up request refers to an increase in the hydrogen demand of the hydrogen utilization apparatus, or an input of an operation start instruction by an operator using an operation device (not shown). Moreover, the increase in the hydrogen demand of the hydrogen utilization apparatus refers to the following case: a case where, assuming that the hydrogen utilization apparatus is a hydrogen storage tank, the amount of hydrogen contained in the tank has decreased to be less than or equal to a predetermined threshold, so that the tank needs to be supplied with hydrogen; or a case where, assuming that the hydrogen utilization apparatus is a fuel cell, the power demand of an electrical load has increased to be greater than or equal to a predetermined power threshold, so that the electrical load requires power supply from the fuel cell.

### [Example of Operations Performed When Flame Extinction of Combustor Has Occurred during Hydrogen-Containing Gas Generation in Start-Up Process of Hydrogen Generation Apparatus 100]

In a case where a combustion burner is used as the combustor 2, there is a possibility that the flame of the combustor 2 goes out, causing flame extinction. One of the conceivable causes of the flame extinction of the combustor 2 is a transient disturbance in balance between a supply amount of the combustion fuel and a supply amount of the combustion air. In particular, when the hydrogen-containing gas is being generated, a rapid gas volume expansion due to evaporation of water supplied to the hydrogen generator causes a variation in the amount of combustible gas flowing into the combustor 2. This increases the possibility of flame extinction.

When the hydrogen generation apparatus 100 is generating the hydrogen-containing gas, if flame extinction occurs at the combustor 2 and the hydrogen generation apparatus 100 stops operating, accordingly, then the energy used to increase the temperature of the hydrogen generator 1 is wasted. The flame extinction of the combustor 2 is often caused by, for example, a transient disturbance in a gas amount supplied to the combustor 2. Therefore, if the supply of the raw fuel, water, and the combustion air is continued in the same manner as before the occurrence of the flame extinction, it is expected that the gaseous air-fuel mixture within the combustor 2 remains in an air-fuel ratio that allows the air-fuel mixture to be combusted in the combustor 2. Therefore, usually, the ignition operation is performed, attempting to resume the combustion operation of the combustor 2.

In the hydrogen generation apparatus 100 according to the present embodiment, if flame extinction occurs at the combustor 2 when the hydrogen generation apparatus 100 is generating the hydrogen-containing gas in the start-up process, then the ignition operation of the ignition device 5 is performed with the first on-off valve 8A kept opened, instead of the above-described conventional stop process. Specifically, the ignition operation of the ignition device 5 is performed in such a manner as described in an example below. It should be noted that operations described below are performed as a result of the controller 30 controlling respective components of the hydrogen generation apparatus 100.

In a case where flame extinction has occurred at the combustor 2 during the hydrogen-containing gas generation by the hydrogen generation apparatus 100 in the start-up process, the flame extinction is detected based on an output signal from the flame detector 21. Thereafter, the supply of the raw fuel to the hydrogen generator 1 by means of the raw fuel supply device 20, the supply of water to the hydrogen generator 1 by means of the water supply device 12, and the supply of the combustion air from the combustion air supply device 4 are continued, with the first on-off valve 8A kept opened. Also, the controller 30 controls the ignition device 5 to operate to perform an ignition operation.

As described above, the hydrogen generation apparatus 100 of the present embodiment performs an ignition operation with the first on-off valve 8A kept opened. This makes it possible to re-ignite the combustor 2, with reduced pressure damage to the hydrogen generation apparatus 100 as compared to the conventional art.

Further, the period of the ignition operation of the ignition device 5 that is performed in the above case is set to be shorter than the period of the ignition operation of the ignition device 5 that is performed to start the combustion of the combustor 2 for the purpose of starting the temperature increasing step of the hydrogen generator 1 in the start-up process of the hydrogen generation apparatus 100. The reason for this is described below.

The "period of the ignition operation" herein refers to, in the case of the ignition operation of, for example, an igniter, a period over which the igniter continuously generates sparks. The "period of the ignition operation" herein does not refer to an overall ignition period including a retry ignition operation that is performed after pre-purge (purging by air) of the combustor 2.

In the start-up process of the hydrogen generation apparatus 100, the concentration of combustible components in the air-fuel mixture of the combustion air and the combustion fuel can be gradually increased from a non-combustible concentration to a combustible concentration while the ignition operation of the ignition device 5 is being performed. Accordingly, even if the period of the ignition operation is set to be relatively long, it does not cause a problem.

In contrast, in a case where flame extinction has occurred at the combustor 2 during the generation of the hydrogen-containing gas in the start-up process, it can be assumed that the concentration of combustible components in the air-fuel mixture of the combustion air and the combustion fuel within the combustor 2 is already a combustible concentration. Accordingly, if the period of the ignition operation that is performed in this case is set to be relatively long, the air-fuel mixture is forced to the downstream side of the combustor 2 due to the gas that is supplied to the combustor 2 during the period of the ignition operation. This may result in the air-fuel mixture being discharged to the outside of the hydrogen generation apparatus 100 through an exhaust outlet 300 which is disposed at the downstream end of a flue gas passage.

In view of the above, in order to suppress extended diffusion of combustible gas (i.e., the air-fuel mixture in which the concentration of combustible components is a combustible concentration), it is preferred in this case that the period of the ignition operation of the ignition device 5 is set to be shorter than the period of the ignition operation of the ignition device 5 that is performed to start the temperature increasing step in the start-up process of the hydrogen generation apparatus 100. In addition, in order to suppress extended diffusion of the combustible gas, it is preferred in this case that the ignition operation of the ignition device 5 is performed only once.

According to the above settings, the discharge of the combustible gas to the outside of the hydrogen generation apparatus 100 is suppressed.

Moreover, the period of the ignition operation of the ignition device 5 is set to a predetermined short period of time (a few seconds; for example, "six seconds"). Therefore, the generation of the hydrogen-containing gas by the hydrogen generation apparatus 100 can be continued even during the period of the ignition operation. Accordingly, if the combustor 2 is re-ignited by the ignition operation of the ignition device 5, the combustion of the combustor 2 can be continued without interrupting the generation of the hydrogen-containing gas by the hydrogen generation apparatus 100. It should be noted that whether the combustor 2 has been ignited is determined based on an output signal from the flame detector 21.

In the hydrogen generation apparatus 100 according to the present embodiment, there may be a case where the combustor 2 is not ignited by the ignition operation of the ignition device 5 even if the ignition operation of the ignition device 5 is performed for a period longer than the predetermined "six seconds". In such a case, flame extinction abnormal stop process of the hydrogen generation apparatus 100, which will be described below, is performed by the controller 30.

It should be noted that whether an abnormal ignition, in which the combustor 2 is not ignited, has occurred is determined based on an output signal from the flame detector 21. The predetermined period "six seconds" is merely an example. The period of the ignition operation may be set to any appropriate period depending on, for example, device configurations and a gas flow rate, so long as the set period does not cause the air-fuel mixture containing the combustible gas to be discharged from the exhaust outlet 300 during the period of the ignition operation.

Immediately after the flame extinction abnormal stop of the hydrogen generation apparatus 100 is performed, the combustible gas still exists within the combustor 2. Therefore, the combustion air supply device 4 is operated, and thereby the combustible gas is diluted with air and discharged to the outside of the hydrogen generation apparatus 100. In this case, in the hydrogen generation apparatus 100 according to the present embodiment, the operation amount of the combustion air supply device 4 may be made greater than the operation amount of the combustion air supply device 4 during the hydrogen-containing gas generation in the start-up process of the hydrogen generation apparatus 100. In this manner, the combustible gas that remains within the combustor 2 is treated appropriately.

In the flame extinction abnormal stop process of the hydrogen generation apparatus 100, the supply of the raw fuel and water to the hydrogen generator 1 is stopped. However, the raw fuel, steam, and water still remain within the hydrogen generator 1. Moreover, immediately after the hydrogen generation apparatus 100 has stopped, heat that is sufficient for the remaining water to evaporate and for generating the hydrogen gas through the reforming reaction between the remaining raw fuel and steam is still stored in the hydrogen generator 1.

Therefore, similar to the conventional art, if the first gas passage 8 which bypasses the hydrogen utilization apparatus 7 (fuel cell) is sealed off, then there occurs a gas amount increase (an increase in the number of moles of gas) due to the hydrogen gas generation and water evaporation, resulting in an increase in the internal pressure of the hydrogen generator 1. This may cause structural damage to the hydrogen generator 1.

In view of the above, in the hydrogen generation apparatus 100 according to the present embodiment, after the supply of the raw fuel and water to the hydrogen generator 1 is stopped, the first on-off valve 8A is kept opened.

Accordingly, the combustion air is supplied from the combustion air supply device 4 to the combustor 2 in a state where the first gas passage 8 is opened. As a result, an increase in the internal pressure of the hydrogen generator 1 can be suppressed even while the inside of the combustor 2 is purged with the combustion air (hereinafter, this is referred to as an "excessive pressure increase suppressing operation").

If the excessive pressure increase suppressing operation is performed, there is a possibility that the combustible gas is discharged to the outside of the hydrogen generation apparatus 100 through the exhaust outlet 300 which is disposed at the downstream end of the flue gas passage 10. In the present embodiment, however, the combustion air supply device 4 is operated as described above, and thereby the combustible gas is diluted and the combustible gas concentration is reduced. Then, the diluted gas is discharged to the outside of the hydrogen generation apparatus 100. In this case, the amount of air supplied from the combustion air supply device 4 (specifically, the operation amount of the combustion air supply device 4) may be set in consideration of the amount of combustible components in the combustible gas discharged through the excessive pressure increase suppressing operation, aiming at preventing the combustible gas in which the concentration of combustible components is a combustible concentration from being discharged to the outside of the hydrogen generation apparatus 100.

As described above, the hydrogen generation apparatus 100 according to the present embodiment includes: the hydrogen generator 1 configured to generate a fuel gas through a reforming reaction by using a raw fuel; the combustor 2 configured to heat the hydrogen generator 1; an on-off valve configured to open/block a gas passage through which the gas that is sent out from the hydrogen generator 1 is supplied to the combustor 2; the ignition device 5 provided at the combustor 2; and the controller 30.

With the above configuration, in a case where flame extinction has occurred at the combustor 2 during the generation of the hydrogen-containing gas in the start-up process, an ignition operation following the flame extinction of the combustor 2 is performed through control by the controller 30, in which the ignition operation of the ignition device 5 is performed with the first on-off valve 8A opened.

Thus, in the hydrogen generation apparatus 100 according to the present embodiment which includes the hydrogen generator 1 configured to perform a reforming reaction using evaporative water, pressure damage to the hydrogen generation apparatus 100 that is caused by a gas amount increase due to water evaporation when flame extinction occurs at the combustor 2 is reduced as compared to the conventional art.

### (Embodiment 2)

Hereinafter, specific configuration examples and operational examples of a hydrogen generation apparatus according to Embodiment 2 of the present invention will be described with reference to the accompanying drawings.

It should be noted that the specific description given below merely indicates examples of the hydrogen generation apparatus's features that are recited above at the beginning of Description of Embodiments. For example, in the description of specific examples below, the same terms as those used above to specify respective components of the hydrogen generation apparatus may be used with corresponding reference signs added thereto. In such a case, in the description below, each device specified by a term with a reference sign added thereto is merely an example of a component that is specified by the same term in the above description of the hydrogen generation apparatus.

Accordingly, the above-described features of the hydrogen generation apparatus are not limited by the specific description given below.

### [Example of Configuration of Hydrogen Generation Apparatus]

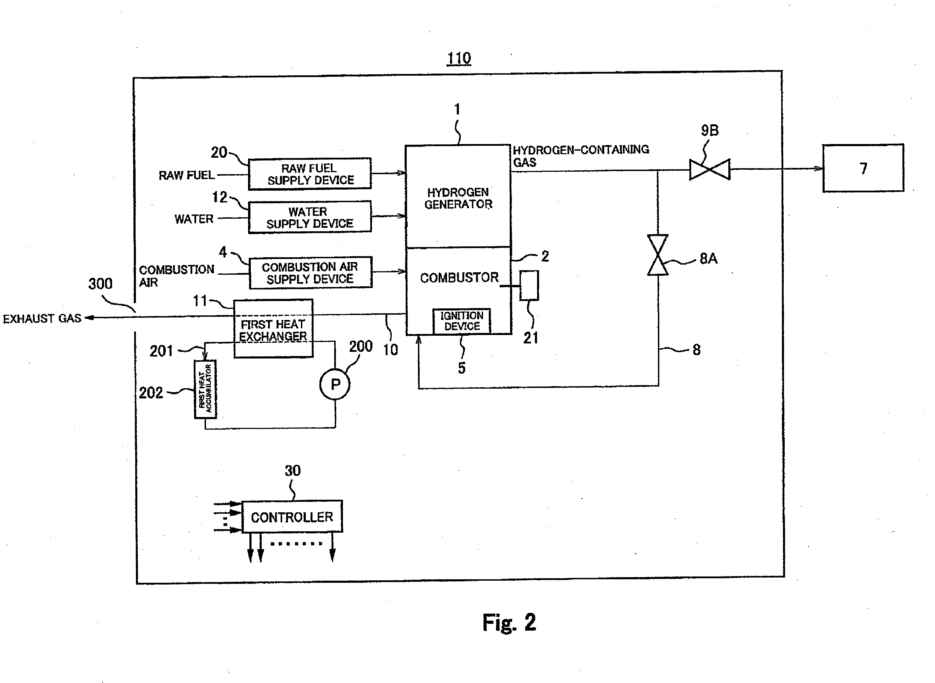

Fig. 2 is a block diagram showing an example of the configuration of the hydrogen generation apparatus according to Embodiment 2 of the present invention.

In Fig. 2, the same components as those of the hydrogen generation apparatus 100 according to Embodiment 1 are denoted by the same reference signs as those used in Embodiment 1, and a detailed description of such components is omitted below.

As shown in Fig. 2, a hydrogen generation apparatus 110 according to the present embodiment is different from the hydrogen generation apparatus 100 according to Embodiment 1 in that the hydrogen generation apparatus 110 additionally includes an exhaust heat recovery mechanism, which is configured to perform heat exchange between an exhaust gas discharged from the combustor 2 and a first heating medium (e.g., water in a liquid form or an antifreezing fluid) flowing through a first heating medium passage 201.

To be specific, the hydrogen generation apparatus 110 according to the present embodiment includes: the flue gas passage 10 through which the exhaust gas flows; the first heating medium passage 201 through which the first heating medium flows; and a first heat exchanger 11 configured to perform heat exchange between the exhaust gas which is a high-temperature gas and the first heating medium which is a low-temperature medium. The first heating medium passage 201 is provided with a first pump 200. The first pump 200 causes the first heating medium to flow through the first heating medium passage 201. The first heating medium passage 201 is provided with a first heat accumulator 202. Accordingly, the first heat accumulator 202 stores therein the first heating medium which flows through the first heating medium passage 201. It should be noted that the operation of the first pump 200 is controlled by the controller 30.

The exhaust gas acts as a heating fluid at the first heat exchanger 11. The exhaust gas, which is discharged from the combustor 2, is guided into the flue gas passage 10, and the exhaust gas is cooled down by using the first heat exchanger 11. The first heating medium acts as a heat receiving fluid at the first heat exchanger 11. The first heating medium is heated through the heat exchange at the first heat exchanger 11, and the first heating medium of which the temperature has been increased due to passing through the first heat exchanger 11 enters the first heat accumulator 202 and is then stored therein.

According to the above configuration, the high-temperature exhaust gas discharged to the outside of the hydrogen generation apparatus 110 is cooled down through the heat exchange, which is advantageous. In addition, the heat from the exhaust gas recovered through the heat exchange can be utilized, which is also advantageous.

### [Example of Operations of Hydrogen Generation Apparatus]

In the hydrogen generation apparatus 110 according to the present embodiment, the heat from the exhaust gas is recovered by the first heating medium via the first heat exchanger 11 as a result of the first pump 200 being operated in at least one of the following periods: a period over which the ignition operation of the ignition device 5 is performed after flame extinction has occurred at the combustor 2 during the hydrogen-containing gas generation in the start-up process of the hydrogen generation apparatus 110; and a period over which the pressure increase suppressing operation is performed in the flame extinction abnormal stop process.

The combustion air supply device 4 operates during the periods of the start-up process, the hydrogen supply step, and the stop process of the hydrogen generation apparatus 110. A heat recovery operation, which is performed in each of these steps and in which the heat from the exhaust gas is recovered by the first heating medium via the first heat exchanger 11, is described below.

In the start-up process and the hydrogen supply operation of the hydrogen generation apparatus 110, the air-fuel mixture is combusted by the combustor 2. At the time, the first pump 200 is operated, and the first heating medium flowing through the first heating medium passage 201 recovers, via the first heat exchanger 11, heat from the exhaust gas (here, a flue gas produced due to the combustion of the air-fuel mixture) of which the temperature is high due to the combustion. In this manner, the high-temperature exhaust gas that is discharged to the outside of the hydrogen generation apparatus 110 is cooled down through the heat recovery via the heat exchanger 11.

The combustion of the air-fuel mixture in the combustor 2 is not performed in the following periods: a period over which the ignition operation of the ignition device 5 is performed after flame extinction has occurred at the combustor 2 during the start-up process of the hydrogen generation apparatus 110; and a period over which the pressure increase suppressing operation is performed in the flame extinction abnormal stop process. In these periods, however, the combustor 2 and the hydrogen generator 1 in a high-temperature state act as heat sources for the exhaust gas. In particular, immediately after the flame extinction abnormal stop process of the hydrogen generation apparatus 110 has started, the operation amount of the combustion air supply device 4 is increased and thereby the flow rate of the combustion air is increased. Accordingly, a large amount of heat is taken out of the combustor 2 and the hydrogen generator 1 by the exhaust gas (here, mainly the combustion air). For this reason, there is a tendency for the temperature of the exhaust gas to increase. Therefore, the heat from the exhaust gas is recovered by the first heating medium via the first heat exchanger 11 as a result of the first pump 200 being operated in at least one of the following periods: a period over which the ignition operation of the ignition device 5 is performed after flame extinction has occurred at the combustor 2; and a period over which the pressure increase suppressing operation is performed in the flame extinction abnormal stop process. In this manner, even when the combustion of the air-fuel mixture is not performed by the combustor 2, it is preferred to perform, during a period over which the combustion air supply device 4 operates, the heat recovery operation in which the heat from the exhaust gas is recovered by the first heating medium via the first heat exchanger 11.

As described above, the hydrogen generation apparatus 110 according to the present embodiment includes: the first heat exchanger 11 configured to perform heat exchange between the exhaust gas discharged from the combustor 2 and the first heating medium; the first heating medium passage 201 through which the first heating medium flows; the first pump 200 for causing the first heating medium to flow through the first heating medium passage 201; and the first heat accumulator 202 configured to store therein the heat recovered by the first heating medium. The controller 30 performs the heat recovery operation, in which the heat from the exhaust gas is recovered by the first heating medium via the heat exchanger 11, by operating the first pump 200 in at least one of the following periods: a period over which the ignition operation of the ignition device 5 is performed after flame extinction has occurred at the combustor 2; and a period over which the combustion air is supplied from the combustion air supply device 4 in the flame extinction abnormal stop process in a state where the combustion is not performed by the combustor 2.

According to the above configuration, the exhaust gas is cooled down appropriately through the above-described heat exchange in at least one of the following periods: a period over which the ignition operation of the ignition device 5 is performed after flame extinction has occurred at the combustor 2; and a period over which the combustion air is supplied from the combustion air supply device 4 in the flame extinction abnormal stop process in a state where the combustion is not performed by the combustor 2. In addition, the heat from the exhaust gas is recovered through the heat exchange.

### (Embodiment 3)

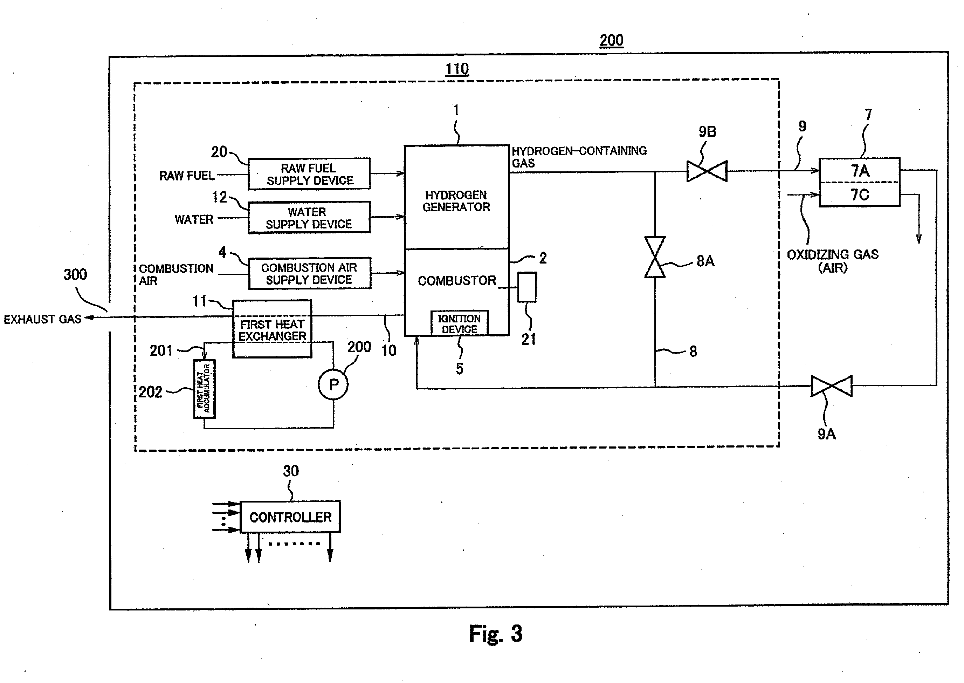

FIG. 3 is a block diagram showing an example of the configuration of a fuel cell system according to Embodiment 3 of the present invention.

In Fig. 3, the same components as those of the hydrogen generation apparatus 110 according to Embodiment 2 are denoted by the same reference signs as those used in Embodiment 2, and a detailed description of such components is omitted below.

As shown in FIG. 3, the fuel cell system according to the present embodiment includes a fuel cell which is used as the hydrogen utilization apparatus 7, and also includes: a second gas passage 9 through which the gas that is sent out from the hydrogen generator 1 is supplied to the combustor 2 through an anode gas passage 7A of the fuel cell 7; and a second gas on-off valve 9A configured to open/block the second gas passage 9.

In the fuel cell system according to the present embodiment, the supply of a combustion fuel to the combustor 2 in the start-up process is performed in a manner described below, for example.

A first supply example is a case where, similar to the hydrogen generation apparatuses according to Embodiments 1 and 2, the first on-off valve 8A is opened and the second and third on-off valves 9A and 9B are closed, and in such a state, the hydrogen-containing gas sent out from the hydrogen generator 1 is used as a combustion fuel for the combustor 2. In this case, the raw fuel from the raw fuel supply device 20 is, when passing through the hydrogen generator 1, transformed into a hydrogen-containing gas. The hydrogen-containing gas is supplied to the combustor 2 through the first gas passage 8 in a manner to bypass the fuel cell.

A second supply example is a case where the first on-off valve 8A is closed and the second and third on-off valves 9A and 9B are opened, and in such a state, an off fuel gas sent out from the fuel cell is used as a combustion fuel for the combustor 2. In this case, the raw fuel from the raw fuel supply device 20 is, when passing through the hydrogen generator 1, transformed into a hydrogen-containing gas. The hydrogen-containing gas passes through the anode gas passage 7A of the fuel cell, and an off fuel gas that is discharged from the anode gas passage 7A is supplied to the combustor 2 through the second gas passage 9.

According to the above configuration, a high-temperature exhaust gas discharged to the outside of the hydrogen generation apparatus 110 is cooled down, which is advantageous.

### [Example of Normal Operations of Fuel Cell System]

Hereinafter, an example of normal operations of the fuel cell system 200 according to Embodiment 3 of the present invention is described. It should be noted that operations described below are performed as a result of the controller 30 controlling respective components of the fuel cell system 200.

The normal operations of the fuel cell system 200 are roughly categorized into the following steps: a start-up process, a power generation operation, a stop process, and a standby state. Since these steps are publicly known, they are described below briefly. It should be noted that the start-up process and the standby state are not described below since the start-up process and the standby state are the same as those of the hydrogen generation apparatus previously described in Embodiment 1.

### (Power Generation Operation)

When the temperature of the reforming catalyst layer of the hydrogen generator 1 has been sufficiently increased so that a hydrogen-containing gas containing hydrogen at a high concentration can be stably generated in the hydrogen generator 1 in the start-up process, the operation based on the first supply example is switched to the operation based on the second supply example and the hydrogen-containing gas starts to be supplied to the fuel cell. The fuel cell generates power by using the hydrogen-containing gas supplied from the hydrogen generation apparatus 110 and an oxidizing gas (e.g., air) supplied from an oxidizing gas supply device (not shown).

### (Stop Process)

The stop process of the fuel cell system is a step of stopping the fuel cell from generating power and stopping the hydrogen generation apparatus 110 from generating the hydrogen-containing gas.

The stop process is performed, for example, in the following case: a case where a user has inputted, via an operation device which is not shown, an instruction to stop the operation of the fuel cell system 200; or a case where the power demand of an electrical load has decreased to be less than or equal to a predetermined power threshold, so that the electrical load does not require power supply from the fuel cell.

In the stop process, the supply of the oxidizing gas from the oxidizing gas supply device (not shown) is stopped, and also, the same stop process as that described in Embodiment 1 is performed for the hydrogen generation apparatus 110.

### [Example of Operations Performed When Flame Extinction of Combustor Has Occurred during Hydrogen-Containing Gas Generation by Hydrogen Generation Apparatus in Start-Up Process]

In the fuel cell system 200 according to the present embodiment, if flame extinction occurs at the combustor 2 during the hydrogen-containing gas generation by the hydrogen generation apparatus 110 in the start-up process, then similar to the hydrogen generation apparatus according to Embodiment 1, the first on-off valve 8A is kept opened, and the supply of the raw fuel to the hydrogen generator 1 by means of the raw fuel supply device 20, the supply of water to the hydrogen generator 1 by means of the water supply device 12, and the supply of the combustion air from the combustion air supply device 4 are continued, and the ignition operation of the ignition device 5 is performed. Accordingly, in the fuel cell system 200 according to the present embodiment, similar to the hydrogen generation apparatus 100 according to Embodiment 1, pressure damage to the hydrogen generation apparatus that is caused by a gas amount increase due to water evaporation is reduced as compared to the conventional art at the time when the ignition operation is performed after flame extinction has occurred at the combustor.

Further, in the fuel cell system 200 according to the present embodiment, similar to the hydrogen generation apparatus according to Embodiment 2, the first heat exchanger 11 performs heat exchange between the exhaust gas and the first heating medium (i.e., heat recovery from the exhaust gas) in at least one of the following periods: a period over which the ignition operation of the ignition device 5 is performed after flame extinction has occurred at the combustor 2 during the hydrogen-containing gas generation by the hydrogen generation apparatus 110 in the start-up process; and a period over which the pressure increase suppressing operation is performed in the flame extinction abnormal stop process.

Accordingly, in the fuel cell system according to the present embodiment, similar to the hydrogen generation apparatus according to Embodiment 2, heat recovery from the exhaust gas is performed appropriately through the above-described heat exchange in at least one of the following periods: a period over which the ignition operation of the ignition device 5 is performed; and a period over which the combustion air is supplied from the combustion air supply device 4 in the flame extinction abnormal stop process in a state where the combustion is not performed by the combustor 2. However, as an alternative, the heat recovery operation of recovering heat from the exhaust gas may be avoided in at least one of the following periods: a period over which the ignition operation is performed; and a period over which the combustion air is supplied from the combustion air supply device 4 in the flame extinction abnormal stop process in a state where the combustion is not performed by the combustor 2.

### [Variation 1]

The above-described fuel cell system according to Embodiment 3 is configured such that, while the hydrogen generation apparatus 110 is generating the hydrogen-containing gas in the start-up process, the hydrogen-containing gas that is sent out from the hydrogen generator 1 is supplied to the combustor 2 according to the first supply example. However, a fuel cell system according to Variation 1 is configured such that, in the start-up process, the hydrogen-containing gas that is sent out from the hydrogen generator 1 is supplied to the combustor 2 according to the second supply example.

In this case, in the start-up process, at the temperature increasing step which is performed before the hydrogen generator 1 starts generating the hydrogen-containing gas, the gas that is sent out from the hydrogen generator 1 and that contains the raw fuel is supplied to the combustor 2 through the first gas passage 8 according to the first supply example. After the hydrogen generator 1 starts generating the hydrogen-containing gas, the hydrogen-containing gas that is sent out from the hydrogen generator 1 is supplied to the combustor 2 according to the second supply example. Moreover, not limiting to the above-described configurations, the fuel cell system may be configured not including the first gas passage 8 and the first on-off valve 8A, such that the combustible gas is supplied to the combustor 2 through the anode gas passage 8A of the fuel cell according to the second supply example from the start of the temperature increasing step of the hydrogen generator 1. This configuration is particularly suitable for a solid oxide fuel cell of an internal reforming type which has a hydrogen generation part internally.

In this variation, in a case where flame extinction has occurred at the combustor 2 during the hydrogen-containing gas generation by the hydrogen generation apparatus in the start-up process, the ignition operation of the ignition device 5 is performed with the second on-off valve 9A and the third on-off valve 9B kept opened. In this case, similar to the hydrogen generation apparatus according to Embodiment 1, the supply of the raw fuel to the hydrogen generator 1 by means of the raw fuel supply device 20, the supply of water to the hydrogen generator 1 by means of the water supply device 12, and the supply of the combustion air from the combustion air supply device 4 are continued. As a result, in the fuel cell system according to Variation 1, similar to the hydrogen generation apparatus according to Embodiment 1, pressure damage to the hydrogen generation apparatus that is caused by a gas amount increase due to water evaporation is reduced as compared to the conventional art at the time when the ignition operation is performed after flame extinction has occurred at the combustor. It should be noted that in the fuel cell system according to Variation 1, the "second on-off valve" is realized as the second on-off valve 9A and the third on-off valve 9B. However, not limiting to this, an alternative configuration may be employed in which either one of the second on-off valve 9A or the third on-off valve 9B is provided on the second gas passage 9, and the second on-off valve 9A or the third on-off valve 9B which is provided on the second gas passage 9 acts as the "second on-off valve".

The fuel cell system according to this variation may be configured such that, similar to the fuel cell system according to Embodiment 3, a heat recovery operation of recovering heat from the exhaust gas is performed in at least one of the following periods: a period over which the ignition operation of the ignition device 5 is performed after flame extinction has occurred at the combustor 2 during the hydrogen-containing gas generation by the hydrogen generation apparatus 110 in the start-up process; and a period over which the pressure increase suppressing operation is performed in the flame extinction abnormal stop process. Alternatively, the fuel cell system according to this variation may be configured such that the heat recovery operation is not performed.

### [Variations of Hydrogen Generation Apparatuses According to Embodiments 1 and 2, Fuel Cell System According to Embodiment 3, and Fuel Cell System According to Variation 1]

In the hydrogen generation apparatuses 100 and 110 according to Embodiments 1 and 2, the fuel cell system 200 according to Embodiment 3, and the fuel cell system according to Variation 1, the controller 30 is configured such that, if flame extinction occurs at the combustor 2 during the hydrogen-containing gas generation by the hydrogen generation apparatus in the start-up process, then the controller 30 causes the raw fuel supply device 20 to supply the raw fuel to the hydrogen generator 1, causes the water supply device 12 to supply water to the hydrogen generator 1, causes the combustion air supply device 4 to supply the combustion air to the combustor 2, and performs the ignition operation of the ignition device 5.

The above configuration provides the following advantage: if the combustor 2 is re-ignited through the ignition operation of the ignition device 5, then the generation of the hydrogen-containing gas by the hydrogen generation apparatus can be continued smoothly since the raw fuel has been supplied to the hydrogen generator 1 by means of the raw fuel supply device 20, water has been supplied to the hydrogen generator 1, and the combustion air has been supplied to the combustor 2 by means of the combustion air supply device 4.

In a hydrogen generation apparatus according to a variation described below, the controller 30 is configured to stop at least one of the following supplies when the ignition operation is performed after flame extinction has occurred at the combustor 2: the supply of the raw fuel to the hydrogen generator 1 by means of the raw fuel supply device 20; and the supply of water to the hydrogen generator 1 from the water supply device 12. In a case where the raw fuel supply device 20 is configured as, for example, a booster pump, the controller 30 may stop the booster pump from operating in order to stop supplying the raw fuel to the hydrogen generator 1. In a case where the water supply device 12 is configured as, for example, a pump, the controller 30 may stop the pump from operating in order to stop supplying water to the hydrogen generator 1.

Even if at least one of the supply of the raw fuel to the hydrogen generator 1 by means of the raw fuel supply device 20 and the supply of water to the hydrogen generator 1 from the water supply device 12 is stopped, steam is still generated from water that remains within the hydrogen generator 1 due to residual heat from the hydrogen generator 1. This causes volume expansion of gas within the hydrogen generator 1. The volume expansion causes the combustible gas to be forced out of the hydrogen generator 1, and as a result, the combustible gas is continuously supplied to the combustor 2. Accordingly, it is expected that the combustor 2 can be ignited through the ignition operation of the ignition device 5.

Also in this variation, in a case where an ignition operation is to be performed, the on-off valve configured to open/block the gas passage through which the gas sent out from the hydrogen generator 1 is supplied to the combustor 2 is kept opened during a period after an occurrence of flame extinction at the combustor 2 until the ignition operation is performed. Accordingly, also in this variation, it is expected that pressure damage to the hydrogen generation apparatus 100 that is caused by gas volume expansion due to water evaporation is reduced as compared to the conventional art at the time when the ignition operation is performed after flame extinction has occurred at the combustor 2 during the generation of the hydrogen-containing gas in the start-up process.

### [Other Variations of Hydrogen Generation Apparatus of Embodiment 2]

Hereinafter, a description is given of various variations of the exhaust heat recovery mechanism used in the hydrogen generation apparatus 110 according to Embodiment 2. It should be noted that the variations of the exhaust heat recovery mechanism which are described below are applicable to the exhaust heat recovery mechanism of the fuel cell system 200 according to Embodiment 3 and the exhaust heat recovery mechanism of the fuel cell system according to Variation 1 although such applications are not shown and described below.

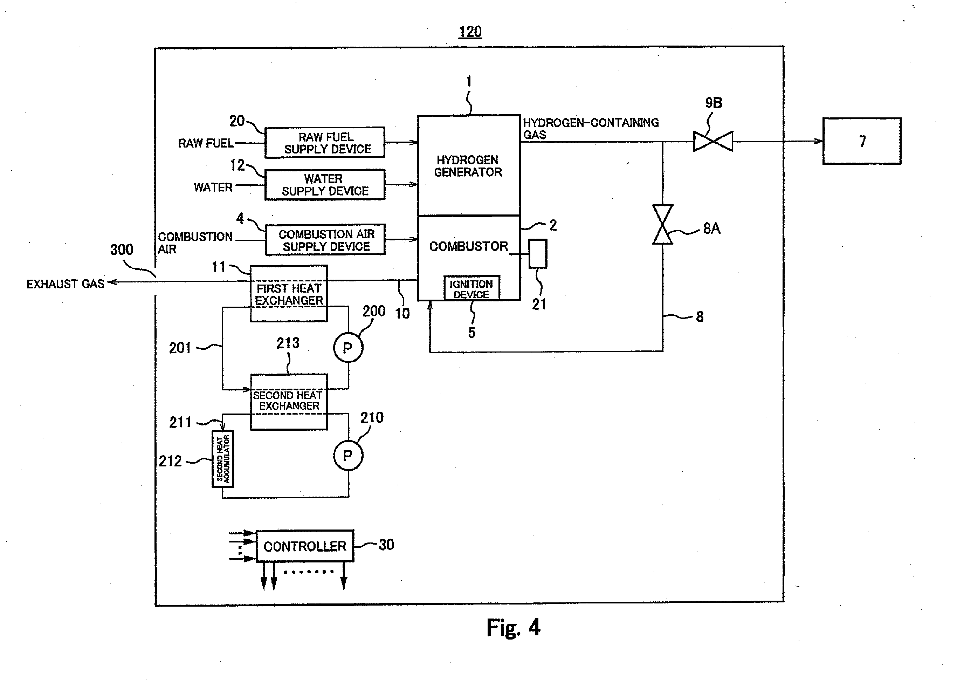

Each of Fig. 4, Fig. 5, and Fig. 6 is a block diagram showing a variation of the exhaust heat recovery mechanism used in the hydrogen generation apparatus according to Embodiment 2.

It should be noted that components common among these diagrams are denoted by reference signs that are common among the diagrams. In the description below, there are cases where a detailed description of the configuration of such common components is omitted.

Fig. 4 shows an exhaust heat recovery mechanism which is configured to recover, via a secondary cooling system, the heat from the exhaust gas discharged from the combustor 2, and to store the recovered heat in a second heat accumulator 212 of the secondary cooling system.

There is provided a second heat exchanger 213 configured to recover heat from the first heating medium flowing through the first heating medium passage 201, and the heat recovered from the first heating medium is transmitted to a second heating medium (e.g., water in a liquid form or an antifreezing fluid) flowing through a second heating medium passage 211. That is, the first heating medium acts as a heating fluid at the second heat exchanger 213, and the second heating medium acts as a heat receiving fluid at the second heat exchanger 213. When a second pump 210 operates, the second heating medium flows through the second heating medium passage 211. As a result, the second heating medium of which the temperature has been increased due to passing through the second heat exchanger 213 enters the second heat accumulator 212, and is then stored therein.

In a hydrogen generation apparatus 120 shown in Fig. 4, the controller 3 controls not only the first pump 200 but also the second pump 210 to operate in at least one of the following periods: a period over which the ignition operation of the ignition device 5 is performed in a state where the combustion is not performed by the combustor 2; and a period over which the combustion air is supplied from the combustion air supply device 4 in the flame extinction abnormal stop process in a state where the combustion is not performed by the combustor 2. Accordingly, the heat from the exhaust gas is eventually recovered by the second heating medium, and as a result, the heat from the exhaust gas is stored in the second heat accumulator 212.

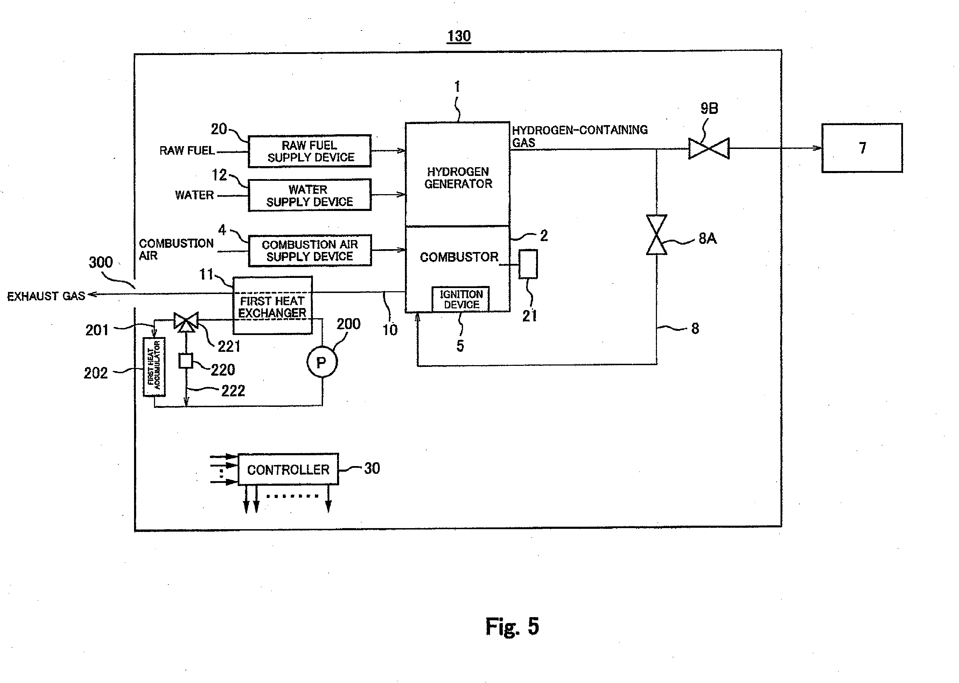

Fig. 5 shows an exhaust heat recovery mechanism which is configured to perform a switching operation with a first switch 221 (e.g., a solenoid three-way valve), such that the first heating medium flows into a first bypass passage 222 when the first heating medium recovers the heat from the exhaust gas.

The first bypass passage 222 connects a passage, of the first heating medium passage 201, that is upstream from the first heat accumulator 202 with a passage, of the first heating medium passage 201, that is downstream from the first heat accumulator 202 in a manner to bypass the first heat accumulator 202. The first switch 221 is configured to switch the destination of the first heating medium that has passed through the first heat exchanger 11, between the first heat accumulator 202 and the first bypass passage 222. The first bypass passage 222 is provided with a radiator 220 which is configured to radiate the heat from the first heating medium that passes through the first bypass passage 222.

In a hydrogen generation apparatus 130 shown in Fig. 5, the controller 30 controls the first pump 200 to operate and controls the first switch 221 to switch the destination of the first heating medium to the first bypass passage 222, in at least one of the following periods: a period over which the ignition operation of the ignition device 5 is performed in a state where the combustion is not performed by the combustor 2; and a period over which the combustion air is supplied from the combustion air supply device 4 in the flame extinction abnormal stop process in a state where the combustion is not performed by the combustor 2. Accordingly, the heat recovered by the first heating medium is radiated via the radiator 220.

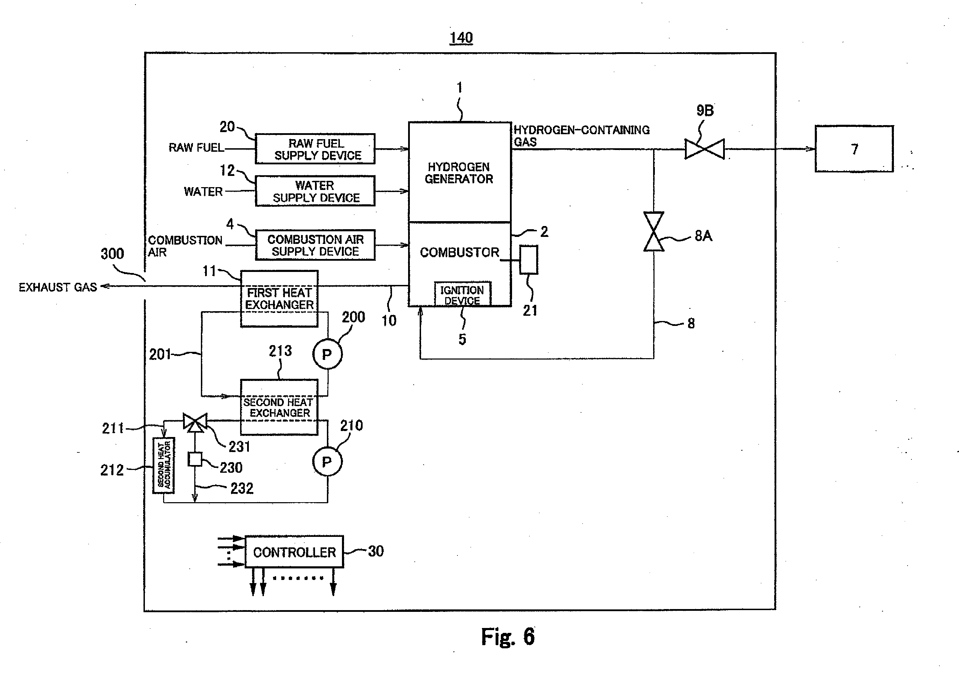

Fig. 6 shows an exhaust heat recovery mechanism which is configured to recover, via the secondary cooling system, the heat from the exhaust gas discharged from the combustor 2, and to store the recovered heat in the second heat accumulator 212 of the secondary cooling system. The secondary cooling system includes a second bypass passage 232 which connects a passage, of the second heating medium passage 211, that is upstream from the second heat accumulator 212 with a passage, of the second heating medium passage 211, that is downstream from the second heat accumulator 212 in a manner to bypass the second heat accumulator 212. There is provided a second switch 231 configured to switch the destination of the second heating medium that has passed through the second heat exchanger 213, between the second heat accumulator 212 and the second bypass passage 232. The second bypass passage 232 is provided with a radiator 230 which is configured to radiate the heat from the second heating medium that passes through the second bypass passage 232.

In a hydrogen generation apparatus 140 shown in Fig. 6, the controller 30 controls the first pump 200 and the second pump 210 to operate and controls the second switch 231 to switch the destination of the second heating medium to the second bypass passage 232, in at least one of the following periods: a period over which the ignition operation of the ignition device 5 is performed in a state where the combustion is not performed by the combustor 2; and a period over which the combustion air is supplied from the combustion air supply device 4 in the flame extinction abnormal stop process in a state where the combustion is not performed by the combustor 2. Accordingly, the heat recovered by the second heating medium is radiated via the radiator 230.

### Industrial Applicability

The present invention is directed to a hydrogen generation apparatus that includes a hydrogen generator configured to perform a reforming reaction using evaporative water, and the present invention provides a hydrogen generation apparatus configured to reduce, as compared to the conventional art, pressure damage caused to the hydrogen generation apparatus when flame extinction has occurred at the combustor, and also provides a fuel cell system including the hydrogen generation apparatus. The hydrogen generation apparatus and the fuel cell system including the hydrogen generation apparatus according to the present invention are useful in various applications. For example, the hydrogen generation apparatus and the fuel cell system including the hydrogen generation apparatus are applicable to a household hydrogen utilization apparatus (e.g., a fuel cell) co-generation system.

### Reference Signs List

- 1: hydrogen generator
- 2: combustor
- 4: combustion air supply device
- 5: ignition device
- 7: hydrogen utilization apparatus
- 7A: anode
- 7C: cathode
- 8: first gas passage
- 8A: first on-off valve
- 9: second gas passage
- 9A: second on-off valve
- 9B: third on-off valve
- 10: flue gas passage
- 11: first heat exchanger
- 12: water supply device
- 20: raw fuel supply device
- 21: detector
- 30: controller
- 100, 110, 120, 130, 140: hydrogen generation apparatus
- 200: fuel cell system
- 201: first heating medium passage
- 202: first heat accumulator
- 212: second heat accumulator
- 200: first pump
- 210: second pump
- 211: second heating medium passage
- 213: second heat exchanger
- 220,230: radiator
- 222: first bypass passage
- 232: second bypass passage

## Claims

1. A method of operation of a hydrogen generation apparatus, the apparatus comprising:
a hydrogen generator (1) configured to generate a hydrogen-containing gas through a reforming reaction by using a raw fuel and steam;
a combustor (2) configured to heat the hydrogen generator (1);
an on-off valve (8A, 9A, 9B) configured to open/block a gas passage (8, 9) through which the gas that is sent out from the hydrogen generator (1) is supplied to the combustor (2);
an ignition device (5) provided at the combustor (2);
a flame detector (21) configured to detect presence or absence of a flame of the combustor (2); and
a controller (30),
**characterized in that**
the method comprising the steps of:
performing combustion during generation of the hydrogen-containing gas in a start-up process by using the gas that is supplied to the combustor (2) through the gas passage (8, 9), and
in a case where the flame detector has detected flame extinction of the combustor (2) during the generation of the hydrogen-containing gas in the start-up process, performing an ignition operation of the ignition device (5) with the on-off valve (8A, 9A, 9B) kept opened.

2. The method according to claim 1, wherein the apparatus comprising:
a combustion air supply device (4) configured to supply combustion air to the combustor (2);
a raw fuel supply device (20) configured to supply the raw fuel to the hydrogen generator (1); and
a water supply device (12) configured to supply water to the hydrogen generator (1), wherein
in the case where the flame detector has detected the flame extinction of the combustor during the generation of the hydrogen-containing gas in the start-up process, the controller causes the raw fuel supply device (20) and the water supply device (12) to supply the raw fuel and the water, respectively, to the hydrogen generator, and to cause the combustion air supply device (4) to supply the combustion air to the combustor (2), and to perform the ignition operation of the ignition device (5), with the on-off valve (8A, 9A, 9B) kept opened.

3. The method according to claim 1, wherein if the combustor (2) is not successfully ignited through the ignition operation, the controller performs a stop process of the hydrogen generation apparatus.

4. The method according to claim 1, wherein if the combustor (2) is not successfully ignited through the ignition operation, the controller controls an operation amount of the combustion air supply device (4) such that the operation amount becomes greater than when the hydrogen-containing gas is being generated in the start-up process.

5. The method according to any one of claims 1 to 4,
wherein the gas passage includes a first gas passage (8) through which the gas that is sent out from the hydrogen generation apparatus is guided into the combustor (2) in a manner to bypass a hydrogen utilization apparatus which uses the hydrogen-containing gas; and
the on-off valve includes a first on-off valve (8A) configured to open/block the first gas passage (8), wherein
during the generation of the hydrogen-containing gas in the start-up process, the gas that is supplied to the combustor (2) through the first gas passage (8) is combusted, and
in the case where the flame detector has detected the flame extinction of the combustor (2) during the generation of the hydrogen-containing gas in the start-up process, the controller performs the ignition operation of the ignition device (5) with the first on-off valve (8A) kept opened.

6. The method according to claim 1 or 2, the apparatus comprising:
a heat exchanger (11, 213) configured to perform heat exchange between an exhaust gas discharged from the combustor (2) and a heating medium;
a heating medium passage (201, 211) through which the heating medium flows;
a pump (200, 210) configured to cause the heating medium to flow through the heating medium passage (201, 211); and
a heat accumulator (202, 212) configured to store heat that has been recovered by the heating medium, wherein
the controller causes the pump (200, 210) to operate during the ignition operation of the ignition device (5).

7. The method according to claim 1, wherein a period over which the ignition operation is performed in said case is shorter than a period over which the ignition operation is performed at the start of the combustion of the combustor (2) in the start-up process.

## Patentansprüche

1. Verfahren für den Betrieb einer Wasserstoff-Erzeugungsvorrichtung, wobei die Vorrichtung umfasst:
einen Wasserstoffgenerator (1), der dazu eingerichtet ist, ein wasserstoffhaltiges Gas durch eine Reformierreaktion mit Hilfe eines Rohbrennstoffes und Dampf zu erzeugen;
einen Verbrenner (2), der dazu eingerichtet ist, den Wasserstoffgenerator (1) zu erwärmen;
ein Ein-Aus-Ventil (8A, 9A, 9B), das dazu eingerichtet ist einen Gasleitungsweg (8, 9) zu öffnen / abzusperren, durch den das Gas, das von dem Wasserstoffgenerator (1) ausgegeben wird, dem Verbrenner (2) zugeführt wird;
eine Zündvorrichtung (5), die an dem Verbrenner (2) vorgesehen ist;
einen Flammendetektor (21), der dazu eingerichtet ist, die Gegenwart oder Abwesenheit einer Flamme des Verbrenners (2) zu erfassen; und
eine Steuereinheit (30),
**dadurch gekennzeichnet, dass**
das Verfahren folgende Schritte umfasst:
Ausführen einer Verbrennung während der Erzeugung des wasserstoffhaltigen Gases bei einem Startvorgang mit Hilfe des Gases, das dem Verbrenner (2) durch den Gasleitungsweg (8, 9) zugeführt wird, und
in einem Fall, in dem der Flammendetektor ein Erlöschen der Flamme des Verbrenners (2) während der Erzeugung des wasserstoffhaltigen Gases bei dem Startvorgang erfasst hat, Ausführen eines Zündvorgangs der Zündvorrichtung (5), wobei das Ein-Aus-Ventil (8A, 9A, 9B) geöffnet bleibt.

2. Verfahren nach Anspruch 1, bei dem die Vorrichtung umfasst:
eine Verbrennungsluft-Zuführvorrichtung (4), die dazu eingerichtet ist, Verbrennungsluft dem Verbrenner (2) zuzuführen;
eine Rohbrennstoff-Zuführvorrichtung (20), die dazu eingerichtet ist, den Rohbrennstoff dem Wasserstoffgenerator (1) zuzuführen; und
eine Wasserzuführvorrichtung (12), die dazu eingerichtet ist, dem Wasserstoffgenerator (1) Wasser zuzuführen, wobei
in dem Fall, in dem der Flammendetektor das Erlöschen der Flamme des Verbrenners während der Erzeugung des wasserstoffhaltigen Gases bei dem Startvorgang erfasst hat, die Steuereinheit die Rohbrennstoff-Zuführvorrichtung (20) und die Wasserzuführvorrichtung (12) veranlasst, jeweils den Rohbrennstoff und das Wasser dem Wasserstoffgenerator zuzuführen, und die Verbrennungsluft-Zuführvorrichtung (4) veranlasst, die Verbrennungsluft dem Verbrenner (2) zuzuführen und den Zündvorgang der Zündvorrichtung (5) auszuführen, wobei das Ein-Aus-Ventil (8A, 9A, 9B) geöffnet bleibt.

3. Verfahren nach Anspruch 1, bei dem, wenn der Verbrenner (2) durch den Zündvorgang nicht erfolgreich gezündet wird, die Steuereinheit einen Stoppvorgang der Wasserstofferzeugungsvorrichtung ausführt.

4. Verfahren nach Anspruch 1, bei dem, wenn der Verbrenner (2) durch den Zündvorgang nicht erfolgreich gezündet wird, die Steuereinheit einen Funktionsumfang der Verbrennungsluft-Zuführvorrichtung (4) derart steuert, dass der Funktionsumfang größer wird als wenn das wasserstoffhaltige Gas bei dem Startvorgang erzeugt wird.

5. Verfahren nach einem der Ansprüche 1 bis 4,
bei dem der Gasleitungsweg einen ersten Gasleitungsweg (8) umfasst, durch den das Gas, das von der Wasserstofferzeugungsvorrichtung ausgegeben wird, in den Verbrenner (2) derart geleitet wird, dass es eine Wasserstoff-Verwendungsvorrichtung umgeht, die das wasserstoffhaltige Gas verwendet; und
das Ein-Aus-Ventil ein erstes Ein-Aus-Ventil (8A) umfasst, das dazu eingerichtet ist, den ersten Gasdurchgang (8) zu öffnen / abzusperren, wobei
während der Erzeugung des wasserstoffhaltigen Gases bei dem Startvorgang das Gas, das von dem Verbrenner (2) durch den ersten Gasleitungsweg (8) zugeführt wird, verbrannt wird, und
in einem Fall, in dem der Flammendetektor das Erlöschen der Flamme des Verbrenners (2) während der Erzeugung des wasserstoffhaltigen Gases bei dem Startvorgang erfasst hat, die Steuereinheit den Zündvorgang der Zündvorrichtung (5) ausführt, wobei das erste Ein-Aus-Ventil (8A) geöffnet bleibt.

6. Verfahren nach Anspruch 1 oder 2, bei dem die Vorrichtung umfasst:
einen Wärmetauscher (11, 213), der dazu eingerichtet ist, einen Wärmeaustausch zwischen einem Abgas, das aus dem Verbrenner (2) ausgegeben wird, und einem Heizmedium auszuführen;
einen Heizmedien-Leitungsweg (201, 211) durch den das Heizmedium strömt;
eine Pumpe (200, 210), die dazu eingerichtet ist zu bewirken, dass das Heizmedium durch den Heizmedien-Leitungsweg (201, 211) strömt; und
einen Wärmeakkumulator (202, 212), der dazu eingerichtet ist, Wärme zu speichern, die von dem Heizmedium zurückgewonnen wird, wobei
die Steuereinheit die Pumpe (200, 210) veranlasst, während des Zündvorgangs der Zündvorrichtung (5) zu arbeiten.

7. Verfahren nach Anspruch 1, bei dem eine Periode, über die der Zündvorgang in diesem Fall ausgeführt wird, kürzer ist als eine Periode, über die der Zündvorgang zu Beginn der Verbrennung des Verbrenners (2) bei dem Startvorgang ausgeführt wird.

## Revendications

1. Procédé de fonctionnement d'un appareil de génération d'hydrogène, l'appareil comprenant :
- un générateur d'hydrogène (1) configuré pour générer un gaz contenant de l'hydrogène par une réaction de reformage en utilisant un combustible brut et de la vapeur ;
- une chambre de combustion (2) configurée pour chauffer le générateur d'hydrogène (1) ;
- une valve de coupure (8A, 9A, 9B) configurée pour ouvrir/bloquer un passage de gaz (8, 9) par lequel le gaz envoyé depuis une sortie du générateur d'hydrogène (1) est délivré à la chambre de combustion (2) ;
- un dispositif d'allumage (5) disposé au niveau de la chambre de combustion (2) ;
- une détecteur de flamme (21) configuré pour détecter une présence ou une absence d'une flamme de la chambre de combustion (2) ; et
- un dispositif de commande (30),
- **caractérisé en ce que** :
- le procédé comprend les étapes consistant à :
- effectuer une combustion durant la génération du gaz contenant de l'hydrogène dans un processus de démarrage en utilisant le gaz délivré à la chambre de combustion (2) par le passage de gaz (8, 9), et
- au cas où le détecteur de flamme aurait détecté une extinction de flamme de la chambre de combustion (2) durant la génération du gaz contenant de l'hydrogène au cours du processus de démarrage, réaliser une opération d'allumage du dispositif d'allumage (5) avec la valve de coupure (8A, 9A, 9B) maintenue ouverte.

2. Procédé selon la revendication 1, pour lequel l'appareil comprend :
- un dispositif d'alimentation en air de combustion (4) configuré pour alimenter en air de combustion la chambre de combustion (2) ;
- un dispositif d'alimentation en combustible brut (20) configuré pour alimenter en combustible brut le générateur d'hydrogène (1) ; et
- un dispositif d'alimentation en eau (12) configuré pour alimenter en eau le générateur d'hydrogène (1), pour lequel :
- au cas où le détecteur de flamme aurait détecté l'extinction de flamme de la chambre de combustion durant la génération du gaz contenant de l'hydrogène au cours du processus de démarrage, le dispositif de commande fait en sorte que le dispositif d'alimentation en combustible brut (20) et le dispositif d'alimentation en eau (12) alimentent en combustible brut et en eau, respectivement, le générateur d'hydrogène et fait en sorte que le dispositif d'alimentation en air de combustion (4) alimente en air de combustion la chambre de combustion (2) et réalise l'opération d'allumage du dispositif d'allumage (5), avec la valve de coupure (8A, 9A, 9B) maintenue ouverte.

3. Procédé selon la revendication 1, pour lequel, si la chambre de combustion (2) ne parvient pas à être allumée par l'opération d'allumage, le dispositif de commande met en oeuvre un processus d'arrêt de l'appareil de génération d'hydrogène.

4. Procédé selon la revendication 1, pour lequel, si la chambre de combustion (2) ne parvient pas à être allumée par l'opération d'allumage, le dispositif de commande réalise une commande de la quantité d'opération du dispositif d'alimentation en air de combustion (4) de sorte que la quantité d'opération devienne plus importante que lorsque le gaz contenant de l'hydrogène est généré au cours du processus de démarrage.

5. Procédé selon l'une quelconque des revendications 1 à 4,
- pour lequel le passage de gaz inclut un premier passage de gaz (8) par lequel le gaz envoyé en sortie de l'appareil de génération d'hydrogène est guidé vers la chambre de combustion (2) de manière à contourner un appareil utilisant de l'hydrogène utilisant le gaz contenant de l'hydrogène ; et
- la valve de coupure inclut une première valve de coupure (8A) configurée pour ouvrir/bloquer le premier passage de gaz (8), pour lequel :
- durant la génération du gaz contenant de l'hydrogène au cours du processus de démarrage, le gaz délivré à la chambre de combustion (2) par le premier passage de gaz (8) est mis en combustion, et
- au cas où le détecteur de flamme aurait détecté l'extinction de flamme de la chambre de combustion (2) durant la génération du gaz contenant de l'hydrogène au cours du processus de démarrage, le dispositif de commande effectue l'opération d'allumage du dispositif d'allumage (5) avec la première valve de coupure (8A) maintenue ouverte.

6. Procédé selon les revendications 1 ou 2, l'appareil comprenant :
- un échangeur de chaleur (11, 213) configuré pour effectuer un échange de chaleur entre un gaz d'échappement déchargé de la chambre de combustion (2) et un milieu de chauffage ;
- un passage de milieu chauffant (201, 211) par lequel s'écoule le milieu chauffant ;
- une pompe (200, 210) configurée pour faire en sorte que le milieu chauffant traverse le passage de milieu chauffant (201, 211) ; et
- un accumulateur de chaleur (202, 212) configuré pour stocker de la chaleur récupérée par le milieu chauffant, pour lequel
- le dispositif de commande fait en sorte que la pompe (20, 210) opère durant l'opération d'allumage du dispositif d'allumage (5).

7. Procédé selon la revendication 1, pour lequel une période pendant laquelle l'opération d'allumage est effectuée dans ledit cas est plus courte qu'une période pendant laquelle l'opération d'allumage est effectuée au démarrage de la combustion de la chambre de combustion (2) au cours du processus de démarrage.
